(19) Europäisches Patentamt
European Patent Office
Office européen des brevets

(11) **EP 4 734 196 A1**

(12) **DEMANDE DE BREVET EUROPEEN**

(43) Date de publication:
**29.04.2026 Bulletin 2026/18**

(21) Numéro de dépôt: **25210653.9**

(22) Date de dépôt: **23.10.2025**

(51) Classification Internationale des Brevets (IPC):
**H01M 8/04537** $^{(2016.01)}$ **H01M 8/04664** $^{(2016.01)}$
**H01M 8/04746** $^{(2016.01)}$ **H01M 8/04228** $^{(2016.01)}$

(52) Classification Coopérative des Brevets (CPC):
**H01M 8/04552; H01M 8/04228; H01M 8/04559;**
**H01M 8/04582; H01M 8/04589; H01M 8/04671;**
**H01M 8/04679; H01M 8/04753;** H01M 2250/20

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH LA MA MD TN**

(30) Priorité: **23.10.2024 FR 2411547**

(71) Demandeur: **AMPERE s.a.s.**
**92100 Boulougne-Billancourt (FR)**

(72) Inventeurs:
• **ABD-EL-KADER, Ahmad**
**78280 Guyancourt (FR)**
• **GERARD, David**
**78280 Guyancourt (FR)**
• **LOUDOT, Serge**
**78280 Guyancourt (FR)**
• **MARCHAND, Marielle**
**78280 Guyancourt (FR)**

(74) Mandataire: **Renault Group**
**Renault s.a.s.**
**1 avenue du Golf**
**FR TCR AVA 055**
**78084 Guyancourt Cedex (FR)**

(54) **PROCEDE DE DIAGNOSTIC ET DE REGENERATION D'UNE PILE A COMBUSTIBLE**

(57) L'invention concerne un procédé de diagnostic d'un état de santé d'une pile à combustible (10) d'un ensemble générateur de courant (1) équipant un véhicule automobile, selon lequel, lors d'une phase de maintenance du véhicule automobile au sein d'un atelier, il est prévu des étapes de :
- branchement d'un réservoir de diazote ($N_2$) sur une ligne d'admission d'air (40) de l'ensemble générateur de courant,
- alimentation d'une anode de la pile à combustible en dihydrogène ($H_2$) et d'une cathode de la pile à combustible en diazote,
- pilotage de la tension générée par la pile à combustible de façon qu'elle varie,
- mesure de l'intensité du courant généré par la pile à combustible lorsque la tension varie,
- comparaison de l'intensité mesurée avec une référence, et
- diagnostic dudit état de santé en fonction du résultat de ladite comparaison.

[Fig. 1]

EP 4 734 196 A1

## Description

DOMAINE TECHNIQUE DE L'INVENTION

La présente invention concerne de manière générale les piles à combustible.

Elle concerne plus particulièrement un procédé de diagnostic d'un état de santé d'une pile à combustible d'un ensemble générateur de courant équipant un véhicule automobile, ainsi qu'un procédé de maintenance de cette pile.

Elle concerne également un ensemble générateur de courant embarqué dans un véhicule et spécialement conçu pour mettre en œuvre l'un et/ou l'autre de ces deux procédés.

ETAT DE LA TECHNIQUE

Il est connu de générer un courant électrique à l'aide d'une pile à combustible dans laquelle se produit, sur une première électrode, une réaction d'oxydation d'un combustible réducteur, et, sur une seconde électrode, une réaction de réduction d'un oxydant.

En règle générale, une telle pile à combustible utilise comme combustible réducteur du dihydrogène et comme oxydant le dioxygène contenu dans l'air.

Ces piles à combustible, notamment celles dites « à membrane échangeuse de protons (PEMFC) », sont alors très sensibles aux polluants contenus dans l'air. Elles sont plus particulièrement sensibles au dioxyde de soufre ($SO_2$) et au dioxyde d'azote ($NO_2$). Ces polluants s'accumulent en effet sur les surfaces de leurs électrodes, entravant alors les réactions d'oxydation et de réduction et réduisant ainsi l'efficacité globale de la pile à combustible.

Cette détérioration progressive des performances de la pile à combustible entraîne une augmentation des coûts de maintenance et une réduction de la durée de vie de la pile. Cette détérioration est d'autant plus rapide que la pile à combustible est utilisée dans des zones où l'air est pollué (notamment dans des zones urbaines).

Cette détérioration est toutefois réversible, pour autant que la concentration en polluants sur les électrodes ne soit pas trop élevée.

Le document US2003180586 propose ainsi d'insuffler de l'azote à la place de l'air dans la pile à combustible afin de la régénérer.

Cette régénération doit être mise en œuvre régulièrement pour éviter une détérioration irréversible de la pile à combustible, ce qui s'avère en pratique onéreux.

On connaît alors différentes méthodes de détermination d'un paramètre ECSA (pour « surface électrochimiquement active ») permettant de déterminer dans quelle mesure la pile à combustible est altérée par les polluants et doit effectivement être régénérée, mais ces méthodes requièrent toutes un temps important pour être mises en œuvre. En outre, elles ne sont absolument pas adaptées à la régénération de piles à combustibles équipant des véhicules automobiles.

PRESENTATION DE L'INVENTION

Afin de remédier aux inconvénients précités de l'état de la technique, la présente invention propose une méthode permettant de déterminer lors d'un entretien du véhicule s'il est nécessaire ou non de procéder à une opération de régénération de la pile à combustible.

Plus particulièrement, on propose selon l'invention un procédé de diagnostic d'un état de santé d'une pile à combustible d'un ensemble générateur de courant équipant un véhicule automobile, selon lequel, lors d'une phase de maintenance du véhicule automobile au sein d'un atelier, il est prévu des étapes de :

- branchement d'un réservoir de diazote sur une ligne d'admission d'air de l'ensemble générateur de courant,
- alimentation d'une anode de la pile à combustible en dihydrogène et d'une cathode de la pile à combustible en diazote,
- pilotage de la tension appliquée à la pile à combustible de façon qu'elle varie,
- mesure de l'intensité du courant généré par la pile à combustible lorsque la tension varie,
- comparaison de l'intensité mesurée avec une référence, et
- diagnostic dudit état de santé en fonction du résultat de ladite comparaison.

Ainsi, grâce à l'invention, il est possible de brancher en atelier un réservoir de diazote sur la pile à combustible afin de tester simplement cette pile à combustible pour déterminer si elle doit être régénérée.

Cette solution permet en outre de détecter facilement quel est le meilleur processus pour la régénérer.

D'autres caractéristiques avantageuses et non limitatives du procédé de diagnostic conforme à l'invention, prises individuellement ou selon toutes les combinaisons techniquement possibles, sont les suivantes :

- la pile à combustible comportant au moins une cellule, la tension est pilotée pour varier entre deux bornes, dont une borne basse inférieure à 0,1 V par cellule (cette valeur devant être multipliée par le nombre de cellules), et une borne haute comprise entre 0,3 V et 0,9 V par cellule, ladite borne basse étant de préférence non-nulle et ladite borne haute étant de préférence égale à 0,8 V par cellule ;
- la tension est pilotée pour varier linéairement entre ces deux bornes ;
- l'intensité mesurée est comparée avec la référence uniquement dans une fenêtre où ladite tension est comprise entre 0,1 et 0,3V par cellule ;
- si l'intensité mesurée est égale à ladite référence, à un écart près, le diagnostic indique qu'aucune régénération de la pile à combustible n'est nécessaire, sinon le diagnostic indique qu'une régénération de la pile à combustible est nécessaire ;

- si le diagnostic indique qu'une régénération de la pile à combustible est nécessaire, il indique également quel type processus de régénération appliquer, ledit type étant différent selon que l'intensité mesurée est positive ou négative.

L'invention propose également un procédé de maintenance d'un véhicule automobile équipé d'un ensemble générateur de courant comprenant une pile à combustible, dans lequel il est prévu de mettre en œuvre :

- un procédé de diagnostic tel que précité puis,
- selon le résultat du diagnostic, une étape de régénération de la pile à combustible.

D'autres caractéristiques avantageuses et non limitatives du procédé de maintenance conforme à l'invention, prises individuellement ou selon toutes les combinaisons techniquement possibles, sont les suivantes :

- à l'étape de comparaison du procédé de diagnostic, on détermine si l'intensité mesurée est sensiblement égale à ladite référence et si elle est positive ou négative dans une fenêtre de tension prédéterminée ;
- l'étape de régénération est mise en œuvre uniquement si l'intensité mesurée n'est pas sensiblement égale à ladite référence, selon un processus qui est différent selon que l'intensité mesurée est positive ou négative ;
- l'étape de régénération comprend, si l'intensité mesurée est positive, deux opérations distinctes et, si l'intensité mesurée est négative, une seule opération, de préférence identique à l'une desdites deux opérations distinctes ;
- l'une des deux opérations distinctes est réalisée en alimentant l'anode de la pile à combustible en dihydrogène et la cathode de la pile à combustible en diazote et en pilotant la tension appliquée à la pile à combustible de façon qu'elle varie, et l'autre des deux opérations distinctes est réalisée en alimentant l'anode de la pile à combustible en dihydrogène et la cathode de la pile à combustible en air chargé d'ozone et en pilotant l'intensité débitée par la pile à combustible de façon qu'elle varie.

L'invention propose aussi un ensemble générateur de courant de véhicule automobile comprenant :

- une pile à combustible,
- une ligne d'admission d'air débouchant dans la pile à combustible, équipée d'un système de branchement d'un réservoir extérieur au véhicule automobile,

- un convertisseur DC-DC qui est connecté, d'un côté, à la pile à combustible, et, de l'autre, à un accessoire consommateur de courant électrique tel qu'une batterie d'accumulateurs, et
- une unité de pilotage qui est adaptée à piloter le convertisseur DC-DC de telle sorte que la pile à combustible présente une tension à ses bornes égale à une consigne de tension.

Préférentiellement, l'unité de pilotage comporte un commutateur adapté à basculer entre :

- un premier état dans lequel l'unité de pilotage est adaptée à piloter le convertisseur DC-DC de telle sorte que la pile à combustible présente une tension à ses bornes égale à une consigne de tension, et
- un second état dans lequel l'unité de pilotage est adaptée à piloter le convertisseur DC-DC de telle sorte que la pile à combustible délivre un courant d'intensité égale à une consigne d'intensité.

Avantageusement, l'unité de pilotage est contrôlée par un superviseur électronique ou humain afin de faire basculer le commutateur dans un état ou dans l'autre.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est une vue schématique d'un ensemble générateur de courant conforme à l'invention, comportant une pile à combustible ;

[Fig. 2] est un schéma électrique illustrant un filtre connecté entre la pile à combustible de la figure 1 et un convertisseur DC-DC de l'ensemble générateur de courant de la figure 1 ;

[Fig. 3] est un schéma illustrant le calcul d'une commande pour le convertisseur DC-DC de la figure 2 ;

[Fig. 4] est un graphique illustrant les variations de tension imposées à la pile à combustible de la figure 1 au cours de cycles de tests ;

[Fig. 5] est un graphique illustrant des variations de courant mesurées en sortie de la pile à combustible de la figure 1 au cours de cycles de test, lorsque la pile à combustible est polluée par du dioxyde de soufre (SO$_2$) ;

[Fig. 6] est un graphique illustrant des variations de courant mesurées en sortie de la pile à combustible de la figure 1 au cours d'autres cycles de test, lorsque la pile à combustible est polluée par du dioxyde d'azote (NO$_2$).

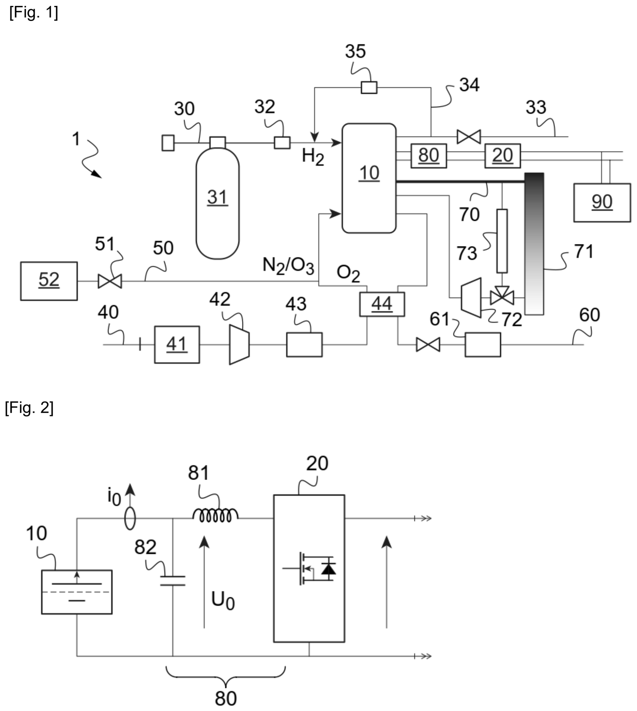

Sur la figure 1, on a représenté un ensemble générateur de courant 1 embarqué dans un véhicule automobile, et plus précisément dans un véhicule terrestre tel que, par exemple, une voiture, une camionnette, un car ou un camion.

Il est notamment prévu pour assurer l'alimentation en courant électrique d'un moteur électrique via un onduleur, directement et/ou indirectement (via une batterie d'accumulateurs).

Cet ensemble générateur de courant 1 comporte une pile à combustible 10.

Ici, cette pile à combustible 10 est du type à membrane échangeuse de protons PEMFC.

Elle comporte de préférence plusieurs cellules identiques, qui comprennent chacune :

- deux électrodes, à savoir une anode et une cathode,
- deux plaques bipolaires, dont une première plaque pour distribuer un combustible réducteur (typiquement du dihydrogène H$_2$) vers l'anode, et une seconde plaque pour distribuer un combustible oxydant (par exemple du dioxygène O$_2$) vers la cathode, et
- une membrane échangeuse de protons faisant fonction d'électrolyte isolant (elle bloque le passage des électrons tout en laissant passer les ions H+).

Enfin, chaque cellule de la pile à combustible 10 comporte deux bornes électriques connectées aux deux électrodes.

En pratique, chaque cellule de la pile à combustible 10 est en mesure de générer une faible tension. C'est la raison pour laquelle la pile à combustible comporte un grand nombre de cellules identiques ou similaires (plusieurs centaines), connectées en série les unes avec les autres par leurs bornes. Cette pile à combustible 10 comporte alors deux bornes principales entre lesquelles ces cellules sont connectées.

L'ensemble générateur de courant 1 comporte ici un convertisseur DC-DC 20 permettant de moduler une puissance appliquée par la pile à combustible 10 au réseau haute tension, dont la tension est imposée par la batterie d'accumulateurs.

Ce convertisseur DC-DC 20 comporte classiquement deux bornes d'entrée, connectées aux bornes principales de la pile ici via un filtre 80, et deux bornes de sortie. Ses deux bornes de sortie sont connectées à un appareil consommateur de courant, typiquement une batterie d'accumulateurs.

L'ensemble générateur de courant 1 comporte également un circuit d'amenée de dihydrogène 30 qui débouche dans la première plaque bipolaire.

Ce circuit d'amenée de dihydrogène 30 comporte ici notamment un réservoir de dihydrogène 31 et une vanne 32 de régulation du débit de dihydrogène.

L'ensemble générateur de courant 1 comporte en outre une conduite d'évacuation 33 de fluide résiduel, qui prend naissance dans la première plaque bipolaire et débouche vers l'extérieur. Il comporte aussi une conduite de recirculation 34 qui permet de prélever une partie du fluide circulant dans la conduite d'évacuation 33 pour la réinjecter dans la première plaque bipolaire. Cette conduite de recirculation 34 est équipé d'une autre vanne de régulation du débit 35.

L'ensemble générateur de courant 1 comporte par ailleurs une ligne d'admission d'air 40 qui comprend successivement un filtre à air 41 prélevant et filtrant l'air de l'atmosphère, un compresseur d'air 42 comprimant l'air filtré, un refroidisseur d'air 43 qui refroidit l'air comprimé et un humidificateur d'air 44. Elle débouche dans la seconde plaque bipolaire.

L'ensemble générateur de courant 1 comporte aussi une ligne d'évacuation de fluide 60, permettant d'évacuer notamment l'eau issu de la réaction chimique ayant lieu dans la pile à combustible 10. Cette ligne d'évacuation de fluide 60 prend naissance dans la seconde plaque bipolaire, passe au travers de l'humidificateur d'air 44 afin de l'alimenter en eau, et comprend un silencieux d'échappement 61 ou un élément de stockage.

Selon l'invention, l'ensemble générateur de courant 1 comporte aussi un système de branchement d'un réservoir extérieur au véhicule sur la ligne d'admission d'air 40, permettant d'alimenter la seconde plaque bipolaire avec un gaz autre que l'air extérieur lors de phases de maintenance du véhicule.

En pratique, ce système de branchement comporte une conduite d'injection de gaz 50 qui débouche dans la ligne d'admission d'air 40, par exemple entre l'humidificateur d'air 44 et la seconde plaque bipolaire. Cette conduite d'injection de gaz 50 présente en entrée un connecteur par lequel il est possible de la connecter à un réservoir de gaz 52 afin d'insuffler dans la seconde plaque bipolaire un gaz différent de l'air (par exemple de l'azote N$_2$) ou un mélange d'air et de gaz additionnel (par exemple de l'azote N$_2$ ou de l'ozone O$_3$). Elle est en outre dotée d'une vanne 51 de régulation du débit.

Lorsque la pile à combustible fonctionne, elle émet de la chaleur qu'il convient d'évacuer. Pour cette raison, l'ensemble générateur de courant 1 comprend un circuit de refroidissement 70 qui passe contre les cellules de la pile à combustible 10 et qui comprend une pompe 72 permettant de faire circuler un liquide caloporteur en boucle dans le circuit, et un échangeur de chaleur 71 permettant de refroidir le liquide caloporteur.

Un désioniseur 73 est prévu dans ce circuit, ici en parallèle de l'échangeur de chaleur 71, pour éviter que le liquide caloporteur ne se charge excessivement en ions.

Sur la figure 2, on a représenté en détail le filtre 80 prévu entre les bornes principales de la pile à combustible 10 et les bornes d'entrée du convertisseur DC-DC. Ce filtre 80 est ici formé par des composants électriques.

En pratique, il s'agit d'un filtre du deuxième ordre, ici du type LC, qui comporte :

- une bobine 81 connectée en série entre la borne positive de la pile à combustible et la borne d'entrée correspondante du convertisseur DC-DC 20, et
- un condensateur 82 branché en parallèle des bornes principales de la pile à combustible.

Il est alors prévu des moyens de mesure de l'intensité $i_0$ du courant débité par la pile à combustible 10 et de la tension $U_0$ à ses bornes. Ici, l'intensité est mesurée au niveau de la borne positive de la pile à combustible 10.

Dans le contexte de l'invention, l'ensemble générateur de courant 1 peut être piloté soit en mode standard, pour débiter un courant électrique, soit en mode de diagnostic.

Le mode standard est celui utilisé pour alimenter le moteur électrique ou la batterie d'accumulateurs en courant électrique, par exemple lors des phases de roulage du véhicule ou de recharge de la batterie. Il peut également être utilisé pour régénérer la pile à combustible 10.

Le mode de diagnostic est quant à lui prévu pour être utilisé lors de phases de diagnostic de l'ensemble générateur de courant 1. Il peut également être utilisé pour régénérer la pile à combustible 10.

De façon préférentielle, l'ensemble générateur de courant 1 comporte alors une unité de pilotage 90 adaptée à piloter le convertisseur DC-DC 20 dans l'un et l'autre de ces deux modes.

Cette unité de pilotage 90 comporte un processeur et une mémoire (ou un circuit de logique programmable), ainsi que différentes interfaces d'entrée et de sortie.

Grâce à ses interfaces d'entrée, elle est adaptée à recevoir des consignes et les mesures d'intensité $i_0$ et de tension $U_0$.

Grâce à ses interfaces de sortie, elle est adaptée à commander le convertisseur DC-DC 20.

Grâce à sa mémoire, elle mémorise une application informatique, constituée de programmes d'ordinateur comprenant des instructions dont l'exécution par le processeur permet la mise en œuvre par le calculateur du procédé décrit ci-après. Dans la variante où elle comporte une logique programmable, ses portes logiques sont programmées pour mettre en œuvre ce procédé.

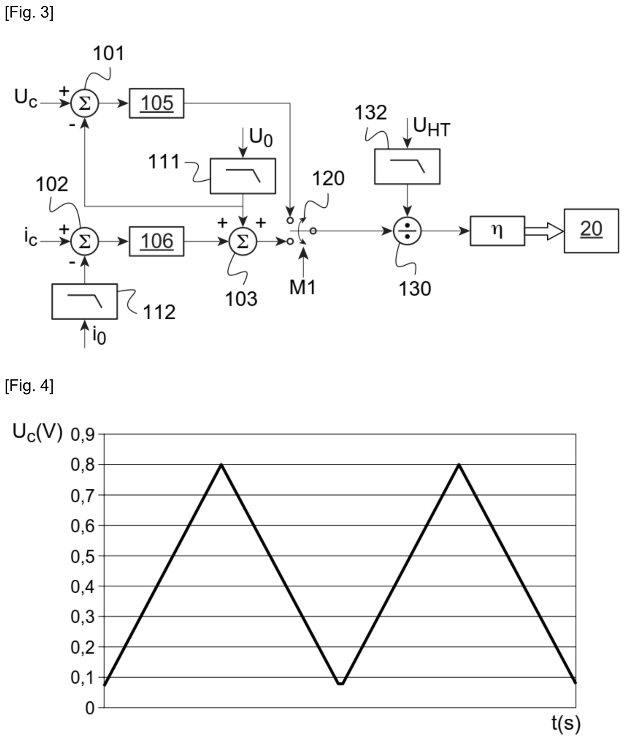

Sur la figure 3, on a ainsi illustré comment est calculée la commande du convertisseur DC-DC 20 par l'unité de pilotage 90.

Initialement, l'unité de pilotage 90 obtient d'un superviseur un indicateur M1 du mode utilisé, dont la valeur indique si l'ensemble générateur de courant 1 doit fonctionner en mode standard ou en mode diagnostic. Le superviseur peut être l'opérateur en charge de la maintenance du véhicule automobile et de sa pile à combustible 10, ou un système électronique programmé.

L'unité de pilotage 90 acquiert également, selon le mode, une consigne d'intensité de courant à débiter $i_c$ (en mode standard) à débiter de la pile à combustible ou une consigne de tension à délivrer $U_c$ (en mode diagnostic) à la pile à combustible.

Elle acquiert aussi les mesures d'intensité $i_0$ et de tension $U_0$, ainsi qu'une mesure de la tension $U_{HT}$ aux bornes de la batterie d'accumulateurs.

Un premier composant sommateur 101 permet de calculer la différence entre la consigne de tension à délivrer $U_c$ et la tension $U_0$ mesurée. Cette tension mesurée peut toutefois être auparavant filtrée. Il est pour cela ici prévu un filtre passe-bas 111 permettant de supprimer les composantes hautes fréquences de la tension mesurée (typiquement le bruit de commutation) et de réduire les risques de repliement ; sa fréquence de coupure est typiquement de l'ordre de 10 kHz.

A la sortie de ce premier composant sommateur 101, un bloc correcteur 105 permet d'obtenir une tension souhaitée en sortie du convertisseur DC-DC 20. Ce bloc correcteur 105 est par exemple du type proportionnel intégral.

Un second composant sommateur 102 permet de calculer la différence entre la consigne d'intensité de courant à débiter $i_c$ et l'intensité $i_0$ mesurée. Cette intensité mesurée peut toutefois être préalablement filtrée. Il est pour cela ici prévu un filtre passe-bas 112 permettant de supprimer les composantes hautes fréquences de l'intensité mesurée, typiquement au-delà de 3 kHz.

A la sortie de ce second composant sommateur 102, un bloc correcteur 106 permet d'obtenir un écart de tension. Ce bloc correcteur 106 est par exemple du type proportionnel intégral.

Un troisième composant sommateur 103 permet de calculer la somme entre cet écart de tension et la tension $U_0$ filtrée. L'addition de cette mesure (communément appelée 'feed forward') permet de ne pas avoir à la fournir par l'intégrateur du correcteur 106 et de fait améliorer le compromis dynamique/stabilité de la régulation.

Un commutateur 120 permet de choisir, compte tenu de l'indicateur M1 du mode utilisé, soit la sortie du premier bloc correcteur 105 (si le mode de diagnostic est sélectionné), soit la sortie de ce troisième composant sommateur 103 (si le mode standard est sélectionné).

On obtient ainsi une tension que le convertisseur DC-DC 20 doit appliquer en sortie. Cette correction, rapportée à la tension $U_{HT}$ par un bloc diviseur 130, permet d'obtenir le rapport cyclique $\eta$ à utiliser pour

moduler la tension en entrée du convertisseur DC-DC 20 (en modulation de largeur d'impulsions). Ainsi est-il possible d'obtenir une consigne de façon très réactive.

On notera sur la figure 3 que pour les mêmes raisons que précité, la tension $U_{HT}$ pourra être filtrée par un filtre passe-bas 132 avant d'être utilisée par le bloc diviseur 130.

A ce stade, on peut expliquer comment l'unité de pilotage peut procéder au diagnostic du pack de cellules de la pile à combustible 10 au cours d'une opération de maintenance du véhicule automobile en atelier.

On définit une phase de maintenance comme un ensemble d'opérations effectuées pour vérifier, entretenir, réparer ou remplacer des composants d'un véhicule afin de garantir son bon fonctionnement et prolonger sa durée de vie. Cette phase est réalisée dans un atelier mécanique équipé à cet effet. Elle peut inclure la mise à jour de systèmes électroniques. Cette phase de maintenance permet d'assurer que le véhicule fonctionne de manière optimale et qu'il répond aux normes de sécurité. Elle peut être préventive (entretien régulier) ou corrective (réparation suite à une panne).

En règle générale, avant la maintenance (lorsque le véhicule est utilisé par son propriétaire), le mode standard est sélectionné.

Pour effectuer cette maintenance, un opérateur de l'atelier commence alors par sélectionner le mode de diagnostic.

En outre, il connecte un réservoir de diazote $N_2$ humidifié à l'entrée de la conduite d'injection de gaz 50. Les débits de diazote $N_2$ et de dihydrogène $H_2$ sont alors les mêmes que ceux utilisés pendant la phase régénération.

Le diazote est humidifié pour éviter que pendant le diagnostic (et la première opération de régénération), la pile à combustible 10 ne sèche.

Lorsque c'est fait, l'unité de pilotage 90 requiert un balayage de tension. Autrement formulé, elle commande le convertisseur DC-DC 20 de telle sorte que la tension aux bornes de la pile à combustible 10 varie entre deux bornes (en faisant varier le rapport cyclique $\eta$ précité).

La consigne de tension $U_c$ appliquée est illustrée sur la figure 4. Cette consigne de tension varie dans le temps en dents de scie entre deux bornes. Autrement formulé, elle varie de façon linéaire d'une borne à l'autre, le coefficient directeur changeant de signe à chaque fois qu'elle atteint l'une des deux bornes. Ici, un 2 cycles sont appliqués. Autrement formulé, la consigne de tension $U_c$ appliquée monte puis redescend 2 fois.

Les bornes sont ici respectivement égales à 0,08 V et 0,8 V pour une pile à combustible 10. Les cellules de la pile à combustible 10 étant ici connectées en série, ces valeurs doivent donc être multipliées par le nombre de cellules utilisées.

Lorsque la consigne de tension $U_c$ varie, par exemple à une vitesse de 20 mV/s, l'unité de pilotage mesure l'intensité $i_0$ du courant induit (débité par la pile à combustible 10), laquelle sera liée à l'état de santé de la pile à combustible 10.

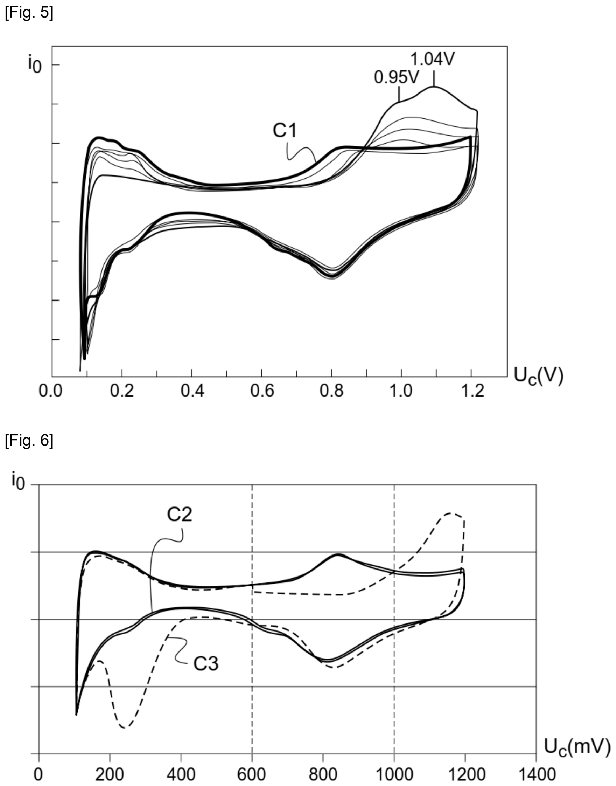

Pour bien illustrer cette concordance, on a représenté sur la figure 5 les résultats de tests similaires, au cours desquels la tension est pilotée pour varier en dents de scie entre 0,08 et 1,2 V (et non entre 0,08 et 0,8V).

Une première courbe C1 illustre le résultat d'un test ECSA standard appliqué à une pile à combustible dont l'état de santé est bon (par exemple lorsqu'elle est neuve).

Les autres courbes illustrent les résultats lorsque la pile à combustible a été affectée par une pollution au dioxyde de souffre $SO_2$.

On observe que ces différentes courbes se superposent, excepté dans deux zones pour lesquelles la consigne de tension $U_c$ est comprise entre 0,08 V et 0,15 V (où une baisse de l'intensité $i_0$ du courant mesuré survient lorsque la pile est polluée), et entre 0,85 V et 1,2 V (où une augmentation de l'intensité $i_0$ du courant mesuré survient lorsque la pile est polluée).

On a également représenté sur la figure 6 les résultats de tests homologues effectués sur d'autres piles à combustible 10 (au cours desquels la tension est pilotée pour varier en dents de scie entre 0,08 et 1,2 V).

Une première courbe C2 illustre le résultat lorsque l'état de santé de la pile est bon. Une autre courbe C3 illustre le résultat lorsque la pile à combustible a été affectée par une pollution au dioxyde d'azote $NO_2$.

On observe ici encore que ces différentes courbes se superposent, excepté dans deux zones pour lesquelles la consigne de tension $U_c$ est comprise entre 0,08 V et 0,15 V et entre 0,85 V et 1,2 V.

En pratique, on observe qu'entre 0,08 V et 0,15 V, l'intensité $i_0$ du courant mesuré est positive dans le cas d'une pollution au dioxyde de souffre $SO_2$ mais est négative dans le cas d'une pollution au dioxyde d'azote $NO_2$. Cette observation permet donc de distinguer les deux types de pollution.

De façon préférentielle, seuls les résultats obtenus dans la fenêtre de consigne de tension $U_c$ comprise entre 0,08 V et 0,15 V seront alors considérés, puisqu'ils permettent de distinguer ces deux types pollutions et qu'il est préférable d'éviter d'appliquer des tensions au-delà de 0,8 V à une pile à combustible (pour éviter une corrosion de carbone côté cathode).

Le diagnostic est donc réalisé en déterminant si l'intensité $i_0$ du courant mesuré est différente de l'intensité attendue dans la fenêtre de tension précitée, et si tel est le cas, si elle est négative ou positive.

Pour réaliser cette comparaison, il est possible de considérer une valeur d'intensité $i_0$ (pour une tension donnée comprise dans la fenêtre), ou plusieurs valeurs d'intensité (par exemple la moyenne de l'intensité $i_0$ dans la fenêtre).

Ainsi, si l'intensité est proche de ou égale à l'intensité attendue, le diagnostic indique que l'état de santé de la pile à combustible est bon et qu'aucune régénération n'est nécessaire.

Dans le cas contraire, si l'intensité mesurée est négative, le diagnostic indique une pollution au dioxyde d'azote $NO_2$, sinon il indique une pollution au dioxyde de souffre $SO_2$. Alors une régentation du pack de cellules de la pile à combustible est nécessaire.

Selon le type de pollution affectant ce pack, le processus de régénération diffère.

Dans le cas d'une pollution au dioxyde d'azote $NO_2$, ce processus comporte deux opérations distinctes tandis que dans le cas d'une pollution au dioxyde de souffre $SO_2$, seule la première de ces deux opérations est nécessaire.

Pour mettre en œuvre ces opérations de régénération, il est nécessaire de connecter les bornes de sorties du convertisseur DC-DC à un consommateur de courant, par exemple ici à une batterie d'accumulateurs non entièrement chargée.

Pour la première opération de régénération, comme précédemment, il est prévu d'alimenter la cathode en azote $N_2$ (comme pendant le diagnostic) et l'anode en hydrogène $H_2$, tandis que l'unité de pilotage 90 force le convertisseur DC/DC à présenter une tension aux bornes de la pile qui varie entre 0,08V et 0,8V par cellule, par exemple à une vitesse de 20 mV/s. Un cycle sera alors défini comme une montée suivie d'une redescente de la tension, entre 0,08 V et 0,8V.

Lors de cette première opération de régénération, l'unité de pilotage 90 force la tension à varier sur au moins un cycle et, de préférence, sur plusieurs cycles. Ainsi, ici au moins 5 cycles sont appliqués. En pratique, une dizaine de cycles sont appliqués, ce nombre résultant d'un compromis entre la qualité du résultat de la régénération et la durée de la régénération.

Les débits d'azote $N_2$ et d'hydrogène $H_2$ sont ici régulés par les vannes 32, 51 de façon à être constants. Ces débits, exprimés en litre normal par heure, sont ici calculés de la façon suivante :

$$Q_{H2} = 6* \ S_{active} \ /25 * N_{Cell}$$

$$Q_{N2} = 9 * S_{active} \ /25 * N_{Cell}$$

Dans ces deux équations, $N_{Cell}$ est le nombre de cellules de la pile à combustible, tandis que $S_{active}$ est la surface active de chaque cellule de la pile, exprimée en $cm^2$.

Pour la seconde opération de régénération, il est cette fois prévu d'alimenter la cathode en air chargé d'ozone $O_3$ et l'anode en hydrogène $H_2$, tandis que l'unité de pilotage 90 pilote le convertisseur DC-DC non plus en tension mais en courant (comme en mode standard). Pour cela, l'opérateur sélectionne le mode standard.

Puis, l'opérateur doit connecter un réservoir d'ozone $O_3$ à l'entrée de la conduite d'injection de gaz 50. L'unité de pilotage pourra alors piloter la vanne 51 et le compresseur 42 de façon à réaliser un mélange ici inférieur à 1% d'ozone (préférentiellement égal à 0,4% en mois).

Le convertisseur DC-DC 20 est alors piloté pour que la pile à combustible débite un courant qui varie entre 0,2 A/cm$^2$ et 1 A/cm$^2$, par exemple à une vitesse de 20 mA/s.

Lors de cette seconde opération de régénération, l'unité de pilotage 90 force l'intensité à varier pendant au moins une minute, et plus préférentiellement pendant plusieurs minutes. En pratique, la durée de cette seconde opération est d'environ 15 minutes, cette durée résultant d'un compromis entre la qualité du résultat de la régénération et la durée de la régénération. En pratique, une dizaine de cycles sont appliqués, ce nombre résultant d'un compromis entre la qualité du résultat de la régénération et la durée de la régénération.

A l'issue de la régénération, l'unité de pilotage peut procéder à un nouveau diagnostic de la pile à combustible 10, d'une manière similaire à celle exposée supra.

Ainsi, lors de ce nouveau diagnostic, l'unité de pilotage 90 vérifie si l'intensité $i_0$ du courant mesuré est égale à ou différente de l'intensité attendue dans la fenêtre de tension sélectionnée.

Si ces intensités sont égales (à une différence près prédéterminée), le diagnostic indique que l'état de santé de la pile à combustible est bon.

Dans le cas contraire, le diagnostic indique que l'état de santé de la pile à combustible est mauvais. Dans cette éventualité, l'unité de pilotage indique à l'opérateur que la pile à combustible souffre d'un défaut, auquel cas l'opérateur pourra envisager le changement de cette pile.

La présente invention n'est nullement limitée au mode de réalisation décrit et représenté, mais l'homme du métier saura y apporter toute variante conforme à l'invention.

Typiquement, on pourrait réaliser uniquement le diagnostic, sans chercher à regénérer la pile à combustible.

## Revendications

1. Procédé de diagnostic d'un état de santé d'une pile à combustible (10) d'un ensemble générateur de courant (1) équipant un véhicule automobile, selon lequel, lors d'une phase de maintenance du véhicule automobile au sein d'un atelier, il est prévu des étapes de :

   - branchement d'un réservoir de diazote ($N_2$) sur une ligne d'admission d'air (40) de l'ensemble générateur de courant (1),
   - alimentation d'une anode de la pile à combustible (10) en dihydrogène ($H_2$) et d'une cathode de la pile à combustible (10) en diazote ($N_2$),

- pilotage de la tension ($U_0$) de la pile à combustible (10) de façon qu'elle varie,
- mesure de l'intensité ($i_0$) du courant généré par la pile à combustible (10) lorsque la tension ($U_0$) varie,
- comparaison de l'intensité ($i_0$) mesurée avec une référence, et
- diagnostic dudit état de santé en fonction du résultat de ladite comparaison.

2. Procédé de diagnostic selon la revendication 1, dans lequel, la pile à combustible (10) comportant au moins une cellule, la tension ($U_0$) est pilotée pour varier entre deux bornes, dont une borne basse inférieure à 0,1 V par cellule, et une borne haute comprise entre 0,3 V et 0,9 V par cellule, ladite borne basse étant de préférence non-nulle et ladite borne haute étant de préférence égale à 0,8 V par cellule.

3. Procédé de diagnostic selon la revendication 1 ou 2, dans lequel l'intensité ($i_0$) mesurée est comparée avec la référence uniquement dans une fenêtre où ladite tension ($U_0$) est comprise entre 0,1 et 0,3V par cellule.

4. Procédé de maintenance d'un véhicule automobile équipé d'un ensemble générateur de courant (1) comprenant une pile à combustible (10), dans lequel il est prévu de mettre en œuvre :

   - un procédé de diagnostic selon l'une des revendications 1 à 3 puis,
   - selon le résultat du diagnostic, une étape de régénération de la pile à combustible (10).

5. Procédé de maintenance selon la revendication 4, dans lequel :

   - à l'étape de comparaison du procédé de diagnostic, on détermine si l'intensité ($i_0$) mesurée est sensiblement égale à ladite référence et si elle est positive ou négative dans une fenêtre de tension ($U_0$) prédéterminée, et
   - l'étape de régénération est mise en œuvre uniquement si l'intensité ($i_0$) mesurée n'est pas sensiblement égale à ladite référence, selon un processus qui est différent selon que l'intensité ($i_0$) mesurée est positive ou négative.

6. Procédé de maintenance selon la revendication 5, dans lequel l'étape de régénération comprend, si l'intensité ($i_0$) mesurée est positive, deux opérations distinctes et, si l'intensité ($i_0$) mesurée est négative, une seule opération, de préférence identique à l'une desdites deux opérations distinctes.

7. Procédé de maintenance selon la revendication 6, dans lequel :

- l'une des deux opérations distinctes est réalisée en alimentant l'anode de la pile à combustible (10) en dihydrogène ($H_2$) et la cathode de la pile à combustible (10) en diazote ($N_2$) et en pilotant la tension ($U_0$) appliquée à la pile à combustible (10) de façon qu'elle varie, et
- l'autre des deux opérations distinctes est réalisée en alimentant l'anode de la pile à combustible (10) en dihydrogène ($H_2$) et la cathode de la pile à combustible (10) en air chargé d'ozone et en pilotant l'intensité ($i_0$) débitée par la pile à combustible (10) de façon qu'elle varie.

8. Ensemble générateur de courant (1) de véhicule automobile, comprenant :

   - une pile à combustible (10),
   - une ligne d'admission d'air (40) débouchant dans la pile à combustible (10), équipée d'un système de branchement d'un réservoir extérieur au véhicule automobile,
   - un convertisseur DC-DC (20) qui est connecté, d'un côté, à la pile à combustible (10), et, de l'autre, à un accessoire consommateur de courant électrique tel qu'une batterie d'accumulateurs, et
   - une unité de pilotage (90) qui est adaptée à piloter le convertisseur DC-DC (20) de telle sorte que la pile à combustible (10) présente une tension ($U_0$) à ses bornes égale à une consigne de tension ($U_c$).

9. Ensemble générateur de courant (1) selon la revendication 8, dans lequel l'unité de pilotage (90) comporte un commutateur (120) adapté à basculer entre :

   - un premier état dans lequel l'unité de pilotage (90) est adaptée à piloter le convertisseur DC-DC (20) de telle sorte que la pile à combustible (10) présente une tension ($U_0$) à ses bornes égale à une consigne de tension ($U_c$), et
   - un second état dans lequel l'unité de pilotage (90) est adaptée à piloter le convertisseur DC-DC (20) de telle sorte que la pile à combustible (10) délivre un courant d'intensité ($i_0$) égale à une consigne d'intensité ($i_c$).

10. Ensemble générateur de courant (1) selon la revendication 9, dans lequel l'unité de pilotage (90) est contrôlée par un superviseur électronique ou humain afin de faire basculer le commutateur (120) dans un état ou dans l'autre.

EP 4 734 196 A1

[Fig. 1]

[Fig. 2]

[Fig. 3]

[Fig. 4]

[Fig. 5]

[Fig. 6]

Europäisches
Patentamt

European
Patent Office

Office européen
des brevets

# RAPPORT DE RECHERCHE EUROPEENNE

**Numéro de la demande**

EP 25 21 0653

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 649 692 B1 (AUDI AG [DE]; VOLKSWAGEN AG [DE]) 24 février 2021 (2021-02-24) | 1,3 | INV.<br>H01M8/04537 |
| Y | * alinéas [0004] - [0028], [0035] - | 4,8-10 | H01M8/04664 |
| A | [0054]; revendications 1-9; figure 1 * | 2,5-7 | H01M8/04746 |
| | ----- | | H01M8/04228 |
| X | DE 10 2007 002426 A1 (DAIMLER CHRYSLER AG [DE]) 15 novembre 2007 (2007-11-15) | 1-3 | |
| Y | * alinéas [0006] - [0008], [0020] - | 4 | |
| A | [0038]; revendications 1-5; figures 1-2 * | 5-10 | |
| | ----- | | |
| Y | EP 2 067 203 B1 (NISSAN MOTOR [JP]) 23 janvier 2013 (2013-01-23) | 4 | |
| A | * revendications 1-13 * | 1-3,5-10 | |
| | ----- | | |
| Y | DE 10 2015 210836 A1 (VOLKSWAGEN AG [DE]) 15 décembre 2016 (2016-12-15) | 8-10 | |
| A | * alinéas [0001], [0004] - [0008], [0019] - [0030], [0048] - [0060], [0075] - [0090]; figures 1-12 * | 1-7 | |
| | ----- | | |
| A | US 2012/270130 A1 (LEMAIRE OLIVIER [FR] ET AL) 25 octobre 2012 (2012-10-25) * le document en entier * | 1-10 | **DOMAINES TECHNIQUES RECHERCHES (IPC)**<br><br>H01M |
| | ----- | | |
| A | FR 2 953 649 A1 (COMMISSARIAT ENERGIE ATOMIQUE [FR]) 10 juin 2011 (2011-06-10) * le document en entier * | 1-10 | |
| | ----- | | |
| A | CN 111 323 467 A (DALIAN INST CHEM & PHYSICS CAS) 23 juin 2020 (2020-06-23) * le document en entier * | 1-10 | |
| | ----- | | |
| A | CN 100 433 437 C (DALIAN CHEMICAL PHYSICS INST [CN]) 12 novembre 2008 (2008-11-12) * le document en entier * | 1-10 | |
| | ----- | | |
| | -/-- | | |

Le présent rapport a été établi pour toutes les revendications

| Lieu de la recherche | Date d'achèvement de la recherche | Examinateur |
|---|---|---|
| Munich | 4 février 2026 | Kennouche, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

**Numéro de la demande**

**EP 25 21 0653**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 9 786 934 B2 (GOULD BENJAMIN D [US]; LYONS KAREN SWIDER [US] ET AL.) 10 octobre 2017 (2017-10-10) * le document en entier * ----- | 1-10 | |
| A | WO 2014/108223 A1 (TOPSØE FUEL CELL AS [DK]) 17 juillet 2014 (2014-07-17) * le document en entier * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 4 février 2026 | Kennouche, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2

**EP 4 734 196 A1**

## ANNEXE AU RAPPORT DE RECHERCHE EUROPEENNE
## RELATIF A LA DEMANDE DE BREVET EUROPEEN NO.

EP 25 21 0653

04-02-2026

| Document brevet cité au rapport de recherche | | Date de publication | Membre(s) de la famille de brevet(s) | | Date de publication |
|---|---|---|---|---|---|
| EP 3649692 | B1 | 24-02-2021 | CN | 111418102 A | 14-07-2020 |
| | | | DE | 102017221741 A1 | 06-06-2019 |
| | | | EP | 3649692 A1 | 13-05-2020 |
| | | | JP | 6853913 B2 | 31-03-2021 |
| | | | JP | 2021500706 A | 07-01-2021 |
| | | | US | 2021111418 A1 | 15-04-2021 |
| | | | WO | 2019105673 A1 | 06-06-2019 |
| DE 102007002426 A1 | | 15-11-2007 | AUCUN | | |
| EP 2067203 | B1 | 23-01-2013 | CA | 2663739 A1 | 27-03-2008 |
| | | | CN | 101517802 A | 26-08-2009 |
| | | | EP | 2067203 A1 | 10-06-2009 |
| | | | JP | 2008077911 A | 03-04-2008 |
| | | | US | 2009130508 A1 | 21-05-2009 |
| | | | WO | 2008035175 A1 | 27-03-2008 |
| DE 102015210836 A1 | | 15-12-2016 | AUCUN | | |
| US 2012270130 | A1 | 25-10-2012 | BR | 112012007409 A2 | 06-12-2016 |
| | | | CA | 2774620 A1 | 31-03-2011 |
| | | | CN | 102598384 A | 18-07-2012 |
| | | | EP | 2481118 A1 | 01-08-2012 |
| | | | FR | 2950739 A1 | 01-04-2011 |
| | | | JP | 2013506241 A | 21-02-2013 |
| | | | US | 2012270130 A1 | 25-10-2012 |
| | | | WO | 2011036356 A1 | 31-03-2011 |
| FR 2953649 | A1 | 10-06-2011 | BR | 112012013115 A2 | 04-04-2017 |
| | | | CA | 2782160 A1 | 16-06-2011 |
| | | | CN | 102725899 A | 10-10-2012 |
| | | | EP | 2507859 A1 | 10-10-2012 |
| | | | FR | 2953649 A1 | 10-06-2011 |
| | | | JP | 2013513201 A | 18-04-2013 |
| | | | US | 2012251907 A1 | 04-10-2012 |
| | | | WO | 2011070242 A1 | 16-06-2011 |
| CN 111323467 | A | 23-06-2020 | AUCUN | | |
| CN 100433437 | C | 12-11-2008 | AUCUN | | |
| US 9786934 | B2 | 10-10-2017 | US | 2011008686 A1 | 13-01-2011 |
| | | | US | 2017244123 A1 | 24-08-2017 |
| WO 2014108223 | A1 | 17-07-2014 | AUCUN | | |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003180586 A